# EUROPÄISCHE PATENTSCHRIFT

(11) **EP 1 772 640 B1**
(45) Veröffentlichungstag und Bekanntmachung des Hinweises auf die Patenterteilung: **18.02.2009**
(21) Anmeldenummer: 06009132.9
(22) Anmeldetag: 03.05.2006
(51) Int. Cl.: F16D 7/00

(54) **Kunststoff-Rutschkupplung**
Plastic slip clutch
Accouplement plastique à glissement

(30) Priorität: 31.05.2005 DE 102005025346
(43) Veröffentlichungstag der Anmeldung: 11.04.2007
(73) Patentinhaber: IMS Gear GmbH, 78166 Donaueschingen (DE)
(72) Erfinder: Hofschulte, Wolfram, 79848 Bonndorf (DE); Knöpfle, Urban, 79822 Titisee-Neustadt (DE)
(74) Vertreter: Göhring, Robert

(56) Entgegenhaltungen:
- EP-B1- 0 702 167
- DE-B- 1 150 845
- FR-A1- 2 853 372
- FR-A1- 2 853 373

## Beschreibung

Die Erfindung bezieht sich auf eine Rutschkupplung für KFZ-Verstellantriebe.

Solche Rutschkupplungen sind z. B. aus EP 0 702 167 B1 bekannt.

Zum Übertragen von Drehmomenten einer rotierenden Welle auf ein Antriebsrad sind Kupplungen bekannt. Allgemein bekannt ist eine Scheibenkupplung mit Planverzahnung, bei welcher die scheibenförmigen Kupplungselemente durch eine Federkraft axial zusammengedrückt werden. Eingesetzt werden solche Scheibenkupplungen beispielsweise in Parkbremsen. Nachteilhaft sind die hohe Anzahl an Bauteilen, insbesondere Feder- und Anlaufscheiben, sowie die grobe mechanische Auflösung bzw. Schrittweite. Außerdem nachteilhaft ist die manuell oder automatisiert und aufwändig vorzunehmende Montage der einzelnen Bauteile beim Zusammenbau der Scheibenkupplung bzw. bei deren Einbau in einem Getriebe.

Die Aufgabe der Erfindung besteht darin, eine alternative Kupplung zum Übertragen von Drehmomenten einer rotierenden Welle vorzuschlagen. Vorteilhafterweise soll die Lösung auch auf translatorische Kupplungen übertragbar sein.

Diese Aufgabe wird durch eine Kunststoff-Rutschküpplung mit den Merkmalen des Patentanspruchs 1.

Vorteilhafte Ausgestaltungen sind Gegenstand von abhängigen Ansprüchen.

Insbesondere bevorzugt wird entsprechend eine Nabe mit einem Innenprofil, welche sich unter Einwirkung einer Kraft größer als einer Grenzkraft elastisch verformende Kunststoffelemente aufweist, wobei die Nabe zum Einsatz in einer solchen Rutschkupplung ausgebildet ist.

Bevorzugt wird insbesondere eine Kunststoff-Rutschkupplung, wobei die elastische Verformung der Kunststoffelemente zum Aufweiten der Nabe bzw. deren Innenprofils und somit zum Durchrutschen des Außenprofils der Welle führt.

Bevorzugt wird insbesondere eine Kunststoff-Rutschkupplung, wobei die Kunststoffelemente als Stege ausgebildet sind.

Bevorzugt wird insbesondere eine Kunststoff-Rutschkupplung, wobei das Innenprofil der Nabe durch die als Stege ausgebildeten Kunststoffelemente das Außenprofil der Welle rundum radial abstützt.

Bevorzugt wird insbesondere eine Kunststoff-Rutschkupplung, wobei die elastische Verformung nach Unterschreiten der Grenzkraft oder nach Unterschreiten einer geringeren Grenzkraft vollständig zurückgeht.

Bevorzugt wird insbesondere eine Kunststoff-Rutschkupplung, wobei die Kunststoffelemente zur Drehmomentübertragung in entsprechend ausgebildete Gegenelemente des Außenprofils der Welle eingreifen.

Bevorzugt wird insbesondere eine Kunststoff-Rutschkupplung, wobei die als Stege ausgebildeten Kunststoffelemente definierte Rastpositionen für die Gegenelemente ausbilden.

Bevorzugt wird insbesondere eine Kunststoff-Rutschkupplung, insbesondere Nabe, gefertigt in werkzeugfallender Ausführung.

Eine solche Kunststoff-Rutschkupplung bzw. insbesondere eine solche Nabe ermöglichen die formschlüssige Übertragung von Drehmomenten mit Durchrutsch-Funktion bei Überbelastung zum Schutz angetriebener Antriebs-Bauteile gegen deren Beschädigung. Vorteilhafterweise ist das Einrasten in Positionen gemäß definierter Auflösung möglich. Gegenüber bekannten Lösungen bietet sich der hervorzuhebende Vorteil einer geringeren Bauteile-Vielfalt, der Herstellmöglichkeit als komplett werkzeugfallende Kunststoffteile bei zudem kompakter Bauweise. Eine mechanische Auflösung ist in feineren Rastschritten als bei bekannten Kupplungen möglich.

Vorteilhafterweise entfallen Federscheiben und Anlaufscheiben sowie elastische Elemente zum Vorspannen von Federscheiben und Anlaufscheiben in axialer Richtung, wie sie bei Kupplungen des Standes der Technik erforderlich sind. Außerdem sind im Vergleich zu bekannten Kupplungen im gleichen Bauraum feinere Rastauflösungen bei gleicher Drehmomentanforderung realisierbar.

Anwendungen bieten sich insbesondere für alle selbsthemmenden Antriebe, welche zusätzlich zum elektrischen Betrieb auch ein manuelles Verstellen ermöglichen sollen. Insbesondere bietet sich ein Schutz der Antriebs-Bauteile bei Missbrauch. Außerdem sind Anwendungen besonders vorteilhaft in nicht blockierfesten Antrieben, z. B. hochübersetzenden Planetengetrieben, zum Schutz der Antriebsbauteile gegen Beschädigung bei Blockierungen der Abtriebswelle einsetzbar.

Gemäß alternativer Ausführung wird entsprechend bevorzugt eine Kunststoff-Rutschkupplung für KFZ-Verstellantriebe mit zwei ineinander eingreifenden, länglich linear ausgebildeten Kupplungselementen, wobei zumindest eines dieser Kupplungselemente ein Profil mit Kunststoffelementen aufweist, welche in ein Gegenprofil des anderen der Kupplungselemente zum Übertragen von linearen Antriebskräften formschlüssig und kraftschlüssig eingesetzt eingreifen, und wobei das eine der Profile Kunststoffelemente zur Kraftübertragung aufweist, wobei sich die Kunststoffelemente bei Einwirkung einer Kraft größer einer Grenzkraft elastisch verformen.

Vorteilhaft ist dabei eine Kunststoff-Rutschkupplung, bei welcher die elastische Verformung der Kunststoffelemente zum Abflachen des entsprechenden Profils und zum Durchrutschen des Gegenprofils führt.

Vorteilhaft ist dabei eine Kunststoff-Rutschkupplung, bei welcher der Abstand der beiden Kupplungselemente derart fest definiert ist, dass ein Nachgeben der Kunststoffelemente zu einer Abflachung des entsprechenden Profils führt und zugleich eine weitere Annäherung der beiden Kupplungselemente vermieden wird, welche ein Durchrutschen verhindern, insbesondere behindern könnte.

Die Kunststoffelemente sind wieder vorteilhaft als Stege ausgebildet. Die elastische Verformung geht vorteilhafterweise nach Unterschreiten der Grenzkraft oder nach Unterschreiten einer geringeren Grenzkraft vollständig zurück. Die Kunststoffelemente greifen vorzugsweise zur Kraftübertragung in entsprechend ausgebildete Gegenelemente des Gegenprofils ein. Die Kunststoffelemente bilden vorteilhafterweise definierte Rastpositionen für die Gegenelemente aus. Auch eine solche Kunststoff-Rutschkupplung ist in werkzeugfallender Ausführung fertigbar.

Ein Ausführungsbeispiel wird nachfolgend anhand der Zeichnung näher erläutert. Es zeigen:
- Fig. 1: eine Welle und eine Nabe einer Kunststoff-Rutschkupplung in auseinandergezogener Darstellung und
- Fig. 2: die Welle und die Nabe in zusammengefügter Anordnung.

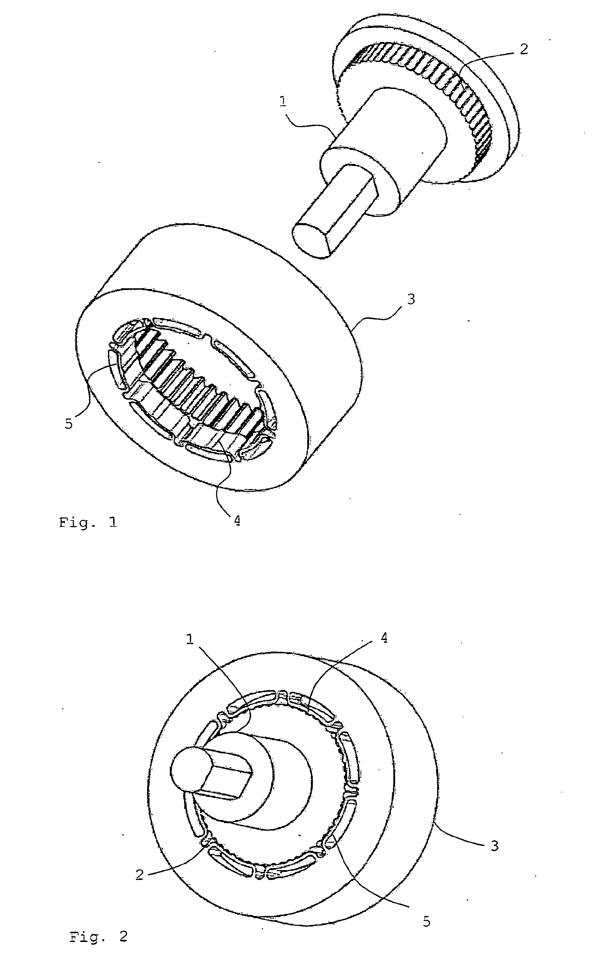

Wie aus Fig. 1 und Fig. 2 ersichtlich ist, besteht die als Kunststoff-Rutschkupplung ausgebildete Kupplung aus einer Welle 1 und einer Nabe 3, welche zum Übertragen eines Drehmoments bzw. einer die Welle in Rotation versetzenden Kraft ineinander einsetzbar sind. Die Welle 1 weist ein Außenprofil 2 auf, welches zur Drehmomentübertragung in ein Innenprofil 4 der Nabe 3 formschlüssig und kraftschlüssig eingreift. Unter formschlüssig ist dabei ein derartiges Eingreifen zu verstehen, dass eine Kraftübertragung bei Rotation der Welle 1 bzw. der Nabe 3 auf das andere dieser Elemente ermöglicht wird.

Das Innenprofil 4 der Nabe 3 weist elastisch verformbare Kunststoffelemente 5, insbesondere elastische verformbare Kunststoffstege als Kunststoffelemente 5 auf, welche in Eingriff mit entsprechenden Gegenelementen des Außenprofils 2 der Welle 1 treten. Die vorteilhafterweise einstückig ausgebildete Nabe mit Innenprofil weist somit das Außenprofil 2 der Welle 1 rundum radial abstützende elastisch verformbare Kunststoffstege als die Kunststoffelemente 5 auf. Besonders vorteilhaft sind sich achsparallel erstreckende Kunststoffstege. Bei Überbelastung, z. B. durch Blockieren oder Missbrauch, ermöglicht die elastische Verformung der Kunststoffelemente 5 bei Überschreitung einer Kraft größer einer Grenzkraft die Aufweitung der Nabe und damit das Durchrutschen der. Kupplung bzw. des Außenprofils 2 der Welle 1.

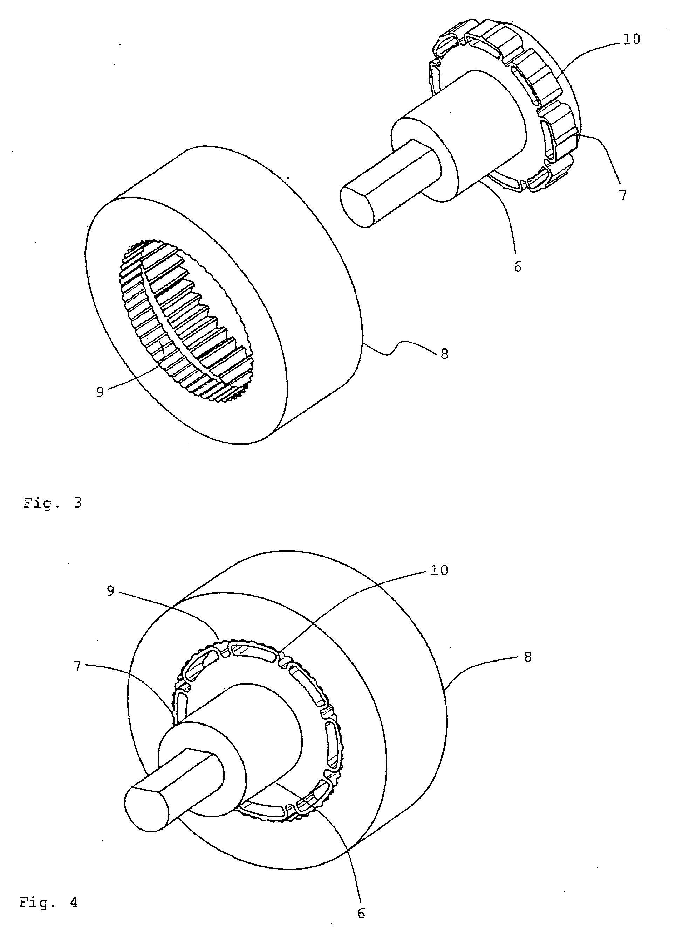

Wie aus Fig. 3 und Fig. 4 ersichtlich ist, besteht die als Kunststoff-Rutschkupplung ausgebildete Kupplung alternativ aus einer Welle 6 und einer Nabe 8, welche zum Übertragen eines Drehmoments bzw. einer die Welle in Rotation versetzenden Kraft ineinander einsetzbar sind. Die Welle 6 weist ein Außenprofil 7 auf, welches zur Drehmomentübertragung in ein Innenprofil 9 der Nabe 8 entsprechend formschlüssig und kraftschlüssig eingreift.

Bei dieser Ausführungsform weist das Außenprofil 7 der Welle 6 elastisch verformbare Kunststoffelemente 10, insbesondere elastische verformbare Kunststoffstege als Kunststoffelemente 10 auf, welche in Eingriff mit entsprechenden Gegenelementen des Innenprofils 9 der Nabe 8 treten. Die vorteilhafterweise. einstückig ausgebildete Welle 6 mit Außenprofil 7 weist somit das Innenprofil 9 der Nabe 8 rundum radial abstützende elastisch verformbare Kunststoffstege als die Kunststoffelemente 10 auf. Besonders vorteilhaft sind sich achsparallel erstreckende Kunststoffstege 10. Bei Überbelastung ermöglicht die elastische Verformung der Kunststoffelemente 10 bei Überschreitung einer Kraft größer einer Grenzkraft eine Verjüngung des Umfangs der Welle 6 und damit das Durchrutschen der Kupplung bzw. des Innenprofils 9 der Nabe 8.

Gemäß einer nicht dargestellten noch weiteren Ausführungsform ist das Prinzip übertragbar auf translatorische Bewegungen und Kunststoff-Rutschkupplungen. In diesem Fall liegen sich ineinander eingreifend zwei längliche lineare Kupplungselemente gegenüber. Zumindest eines dieser Kupplungselemente weist entsprechend ein Profil mit derartigen Kunststoffstegen auf, welche in ein Gegenprofil des anderen der Kupplungselemente eingreifen. Auch bei dieser Ausführungsform sind die Kunststoffstege wieder derart elastisch ausgebildet, dass sie bei einer Überbelastung nachgeben und zu einem Durchrutschen führen. Vorteilhafterweise ist dabei der Abstand der beiden Kupplungselemente fest definiert, so dass ein Nachgeben der Kunststoffelemente zu einer Abflachung des entsprechenden Profils führt und zugleich eine weitere Annäherung der beiden Kupplungselemente vermieden wird, welche ein Durchrutschen ggfs. verhindern könnte.

## Patentansprüche

1. Rutschkupplung für KFZ-Verstellantriebe mit
- einer Nabe (3; 8), die ein Innenprofil (4; 9) aufweist, und
- einer Welle (1; 6), die ein Außenprofil (2; 7) aufweist,
- wobei die Welle mit dem Außenprofil zum Übertragen von Drehmomenten in das Innenprofil der Nabe eingesetzt ist, und mit einer elastisch verformbaren Einrichtung, welche bei Einwirkung einer Kraft größer einer Grenzkraft ein Durchrutschen von Nabe (3; 8) und Welle (1; 6) erlaubt,
**dadurch gekennzeichnet, dass**
die Nabe (3;8) an ihrem Innenprofil (4; 5) oder die Welle (1; 6) an ihrem Außenprofil (2; 7) jeweils mehrere einstückig angeformte und elastisch verformbare Kunststoffelemente (5;10) als elastisch verformbare Einrichtung aufweisen, und dass diese Kunststoffelemente (5; 10) Kraft und formschlüssig in das Außenprofil (2; 7) der Welle (1; 6) oder in das Innenprofil (4; 5) der Nabe (3; 8) eingesetzt sind.'

2. Rutschkupplung nach Anspruch 1, wobei die Kunststoffelemente (5) als Stege ausgebildet sind.

3. Rutschkupplung nach einem vorstehenden Anspruch, wobei das Innenprofil (4) durch die Kunststoffelemente (5) das Außenprofil (2) der Welle (1) rundum radial abstützt.

4. Kunststoff-Rutschkupplung nach einem vorstehenden Anspruch, wobei die Kunststoffelemente (5; 10) zur Drehmomentübertragung in entsprechend ausgebildete Gegenelemente des Außenprofils (2) der Welle (1) bzw. in entsprechend ausgebildete Gegenelemente des Innenprofils (9) der Nabe (8) eingreifen.

5. Kunststoff-Rutschkupplung nach Anspruch 6, wobei die Kunststoffelemente (5; 10) definierte Rastpositionen für die Gegenelemente ausbilden.

6. Rutschkupplung nach einem der Ansprüche 1 bis 5,
**dadurch gekennzeichnet, dass**
die Kunststoffelemente (5; 10) jeweils einen Steg aufweisen, welche in eine Vertiefung am Gegenprofil eingreifen und am Gegenprofil insgesamt wesentlich mehr Vertiefungen vorgesehen sind als insgesamt Stege an den mehreren Kunststoffelementen (5; 10), so dass eine definierte Vielzahl von Rastpositionen ausgebildet ist.

7. Rutschkupplung nach einem der Ansprüche 1 bis 6,
**dadurch gekennzeichnet, dass**
die Nabe (3; 8) oder die Welle (4; 9) samt Innenprofil (4; 9) oder Außenprofil (2;7) als einstückiges, werkzeugfallendes Kunststoffteil ausgebildet ist.

## Claims

1. Slip clutch for adjustable drives of motor vehicles, comprising
- a hub (3; 8) which has an inner profile (4; 9), and
- a shaft (1; 6) which has an outer profile (2; 7),
- wherein the shaft having the outer profile is inserted into the inner profile of the hub in order to transmit torques, and comprising
an elastically deformable device which, when acted upon by a force greater than a limit force, allows a slip-through of the hub (3; 8) and shaft (1; 6),
**characterised in that**
the hub (3; 8) on its inner profile (4; 5) or the shaft (1; 6) on its outer profile (2; 7) respectively has a plurality of elastically deformable plastic elements (5; 10) integrally formed thereon as the elastically deformable device, and
**in that** these plastic elements (5; 10) are inserted in a force-fitting and form-fitting manner into the outer profile (2; 7) of the shaft (1; 6) or into the inner profile (4; 5) of the hub (3; 8).

2. Slip clutch according to claim 1, wherein the plastic elements (5) are designed as webs.

3. Slip clutch according to a preceding claim, wherein the inner profile (4), by means of the plastic elements (5), radially supports the outer profile (2) of the shaft (1) all the way round.

4. Plastic slip clutch according to a preceding claim, wherein, in order to transmit torque, the plastic elements (5; 10) engage in correspondingly designed mating elements of the outer profile (2) of the shaft (1) or in correspondingly designed mating elements of the inner profile (9) of the hub (8).

5. Plastic slip clutch according to claim 6, wherein the plastic elements (5; 10) form defined latching positions for the mating elements.

6. Slip clutch according to one of claims 1 to 5, **characterised in that** the plastic elements (5; 10) in each case comprise a web which engages in a depression on the mating profile, and overall many more depressions are provided on the mating profile than there are webs on the plurality of plastic elements (5; 10), so that a defined plurality of latching positions are formed.

7. Slip clutch according to one of claims 1 to 6, **characterised in that** the hub (3; 8) or the shaft (4; 9) together with the inner profile (4; 9) or outer profile (2; 7) is designed as a one-piece plastic part direct from the mould.

## Revendications

1. Accouplement à glissement pour des actionneurs de véhicule automobile, comprenant
- un moyeu (3 ; 8) muni d'un profil intérieur (4 ; 9) et
- un arbre (1 ; 6) muni d'un profil extérieur (2 ; 7),
l'arbre avec le profil extérieur est utilisé pour transmettre des couples au profil intérieur du moyeu et une installation déformable élastiquement permet le glissement du moyeu (3 ; 8) et de l'arbre (1 ; 6), sous l'effet d'une force supérieure à une force limite,
**caractérisé en ce que**
le moyeu (3 ; 8) présente sur son profil intérieur (4 ; 5) ou bien l'arbre (1 ; 6) présente respectivement sur son profil extérieur (2 ; 7), plusieurs éléments en matière plastique (5 ; 10), formés en une seule pièce et déformables élastiquement pour constituer l'installation déformable élastiquement, et
ces éléments en matière plastique (5 ; 10) sont montés par une liaison par la force et par la forme dans le profil extérieur (2 ; 7) de l'arbre (1 ; 6) ou dans le profil intérieur (4 ; 5) du moyeu (3 ; 8).

2. Accouplement à glissement selon la revendication 1,
dans lequel
les éléments en matière plastique (5) sont des entretoises.

3. Accouplement à glissement selon l'une des revendications précédentes,
dans lequel
le profil intérieur (4) soutient radialement le pourtour du profil extérieur (2) de l'arbre (1) par les éléments en matière plastique (5).

4. Accouplement en matière plastique à glissement selon l'une des revendications précédentes,
dans lequel
les éléments en matière plastique (5 ; 10) pénètrent dans des éléments complémentaires de forme correspondante du profil extérieur (2) de l'arbre (1) ou dans des éléments complémentaires de forme correspondante du profil intérieur (9) du moyeu (8) pour transmettre un couple.

5. Accouplement en matière plastique à glissement selon la revendication 6,
selon lequel
les éléments en matière plastique (5 ; 10) forment des positions d'arrêt, définies, pour les éléments complémentaires.

6. Accouplement à glissement selon l'une des revendications 1 à 5,
**caractérisé en ce que**
les éléments en matière plastique (5 ; 10) ont chacun une entretoise pénétrant dans une cavité du profil complémentaire et celui-ci comporte globalement beaucoup plus de cavités qu'il y a globalement d'entretoises sur les différents éléments en matière plastique (5 ; 10) pour former une multiplicité définie de positions d'enclipsage.

7. Accouplement à glissement selon l'une des revendications 1 à 6,
**caractérisé en ce que**
le moyeu (3 ; 8) ou l'arbre (4 ; 9) avec le profil intérieur (4 ; 9) ou le profil extérieur (2 ; 7) est réalisé comme pièce en matière plastique en une seule partie tombant de l'outillage.
